# EUROPÄISCHE PATENTSCHRIFT

(11) **EP 3 664 003 B1**
(45) Veröffentlichungstag und Bekanntmachung des Hinweises auf die Patenterteilung: **21.09.2022**
(21) Anmeldenummer: 19214047.3
(22) Anmeldetag: 06.12.2019
(51) Int. Cl.: G05D 1/02, G05D 1/10, G06Q 10/08, G06Q 50/30, H05B 47/165

(54) **SYSTEM UND VERFAHREN ZUM FÜHREN EINES AUTONOMEN FAHRZEUGS**
SYSTEM AND METHOD FOR GUIDING AN AUTONOMOUS VEHICLE
SYSTÈME ET PROCÉDÉ DE CONDUITE D'UN VÉHICULE AUTONOME

(30) Priorität: 06.12.2018 DE 102018009603; 28.02.2019 DE 102019105159
(43) Veröffentlichungstag der Anmeldung: 10.06.2020
(73) Patentinhaber: Siteco GmbH, 83301 Traunreut (DE)
(72) Erfinder: Bornemann, Lars, 83254 Breitbrunn (DE); König, Christian, 84558 Kirchweidach (DE)
(74) Vertreter: Schmidt, Steffen

(56) Entgegenhaltungen:
- WO-A1-2015/036912
- WO-A1-2018/105954
- US-A1- 2016 054 130
- US-A1- 2020 064 860
- US-B1- 6 400 482
- ADRIAN DAVID CHEOK ET AL: "Ubiquitous interaction with positioning and navigation using a novel light sensor-based information transmission system", PERSONAL AND UBIQUITOUS COMPUTING, SPRINGER VERLAG, LONDON, GB, vol. 12, no. 6, 1 August 2008 (2008-08-01) , pages 445-458, XP058390876, ISSN: 1617-4909, DOI: 10.1007/S00779-007-0140-9
- BENJAMIN B BEDERSON: "Audio augmented reality", HUMAN FACTORS IN COMPUTING SYSTEMS / CHI '95, CONFERENCE ON HUMAN FACTORS IN COMPUTING SYSTEMS, MAY 7 - 11, 1995, DENVER, COLORADO, USA, ACM PRESS, ASSOCIATION FOR COMPUTING MACHINERY, NEW YORK, US, 7 May 1995 (1995-05-07), pages 210-211, XP058342995, DOI: 10.1145/223355.223526 ISBN: 978-0-89791-755-1

## Beschreibung

Die vorliegende Erfindung betrifft ein System und ein Verfahren zum Führen eines autonomen Fahrzeugs.

Für die Wartung oder Überwachung von Gebäuden, zum Beispiel zum Reinigen der Böden oder für die Überwachung von Gegenständen in Regalen, können autonome Fahrzeuge wie z.B. Drohnen oder Putzroboter eingesetzt werden. Es ist bekannt, dass z.B. autonome Putzroboter sich entlang zufälliger Routen durch Gebäude bewegen können und hierbei oft auch zufriedenstellende Putzergebnisse erzielt werden können. Häufig ist es aber wünschenswert, dass das autonomen Fahrzeug sich entlang einer vorbestimmten Route bewegt, um unnötige Umwege zu vermeiden, oder um sicherzustellen, dass alle Orte entlang der Route auch tatsächlich besucht werden.

Bekannt ist aus dem Stand der Technik, Funk, LiDAR oder Kamerabasierte Systeme zu verwenden um ein autonomes Fahrzeug entlang einer Route zu steuern. Im Falle der Funkführung muss eine aufwendige Infrastruktur erstellt werden. Die Genauigkeit ist dabei dennoch oft nicht ausreichend. Kamerabasierte Systeme sind aufwendig und haben keine 3D-Information der Örtlichkeiten. Um 3D-Informationen zu erlangen müssen aktive Optische Systeme wie IR LED Scanner oder LiDAR Systeme verwendet werden. LiDARsysteme, sowie Kamerasysteme sind aufwendig, teuer und verbrauchen viel elektrische Energie und können keine gezielte Routenplanung bereitstellen.

WO 2015/036 912 A1 offenbart ein Verfahren und Vorrichtungen zur Inbetriebnahme einer Lichtquelle in einem Beleuchtungssystem, das eine Vielzahl von Lichtquellen umfasst. Ein autonomes Fahrzeug mit einem oder mehreren Lichtsensoren und einem Positionsdetektor navigiert durch das Beleuchtungssystem. Der Lichtsensor erfasst einen in einer Lichtquelle kodierten Identifikator und der Positionsdetektor bestimmt den Standort des autonomen Fahrzeugs. Der Ort ist dem kodierten Identifikator zugeordnet und ermöglicht so die Inbetriebnahme der Lichtquelle.

WO 2019/048 296 A1 offenbart, dass ein mobiles Objekt, das für die Bewegung in einem mit VLC-Beleuchtungsquellen ausgestatteten Bereich konfiguriert ist, einen Lichtsensor umfasst, der angeordnet ist, um die Beleuchtung von mindestens einer der Beleuchtungsquellen innerhalb der Ansicht des Lichtsensors zu erfassen. Ein Computer ist konfiguriert, um aus der erfassten Beleuchtung (i) eine Position des mobilen Objekts in Bezug auf die mindestens eine Beleuchtungsquelle und (ii) die Kennung der mindestens einen Beleuchtungsquelle zu bestimmen.

WO 2018/105954 A1 offenbart ein System zum Führen eines autonomen Fahrzeugs gemäß dem Oberbegriff des Anspruchs 1.

Aufgabe der vorliegenden Erfindung ist es, ein System und ein Verfahren zum Führen eines autonomen Fahrzeugs bereitzustellen, das eine oder mehrere der oben genannten Probleme aus dem Stand der Technik löst.

Gelöst wird die Aufgabe durch ein System nach Anspruch 1.

Insbesondere wird ein System zum Führen eines autonomen Fahrzeugs mit einer Vielzahl von vernetzten Beleuchtungsvorrichtungen bereitgestellt. Das System umfasst: eine erste Beleuchtungsvorrichtung mit einem ersten Sender zum Senden eines ersten Führsignals zum Führen des Fahrzeugs, eine zweite Beleuchtungsvorrichtung mit einem zweiten Sender zum Senden eines zweiten Führsignals zum Führen des Fahrzeugs, und eine Steuerung, die dazu ausgebildet ist, den ersten und den zweiten Sender so anzusteuern, dass das Fahrzeug von der ersten zu der zweiten Beleuchtungsvorrichtung geführt wird.

Eine Besonderheit des Systems gemäß der vorliegenden Erfindung besteht darin, dass die Beleuchtungsvorrichtungen nicht nur zur Beleuchtung verwendet werden, sondern darüber hinaus auch zum Aussenden von Führsignalen, die das autonome Fahrzeug von einer Beleuchtungsvorrichtung zur nächsten führen können. Somit kann also die Führung des Fahrzeugs über die Beleuchtungsvorrichtungen erfolgen.

Die Sender der Beleuchtungsvorrichtungen können vorzugsweise unmittelbar neben den Leuchtmitteln der Beleuchtungsvorrichtungen angeordnet sein. Ebenso können die Empfänger der Beleuchtungsvorrichtungen neben den Leuchtmitteln, insbesondere unmittelbar neben den Beleuchtungsvorrichtungen, angeordnet sein.

Die Vernetzung der Beleuchtungsvorrichtungen untereinander kann über ein kabelbasiertes Netzwerk, z.B. ein Bus-System, oder per Funk, z.B. per IEEE 802.11 oder Bluetooth, erfolgen. Das Bus-System kann Teil eines Building Management Systems für das ganze Gebäude sein. In anderen Ausführungsformen erfolgt die Vernetzung über eine Light Management System, das für die Ansteuerung und Verwaltung der Beleuchtungsvorrichtungen in einem Gebäude zuständig ist.

Gemäß einer bevorzugten Ausführungsform ist das Fahrzeug eine Drohne. Da die Beleuchtungsvorrichtungen üblicherweise erhöht angeordnet sind, sind sie besonders geeignet, um Drohnen zu führen. Vorzugsweise verwenden die Drohnen dabei eine Flughöhe, die ungefähr einer Höhe der Anordnung der Beleuchtungsvorrichtungen entspricht.

Gemäß einer bevorzugten Ausführungsform ist vorgesehen, dass die erste und die zweite Beleuchtungsvorrichtung fest installiert sind, insbesondere Teil einer Gebäudeinstallation sind. Zum Beispiel können die Beleuchtungsvorrichtungen an der Decke eines Raumes oder an Lagerregalen angeordnet sein.

Die Vielzahl von Beleuchtungsvorrichtungen umfasst die erste und die zweite Beleuchtungsvorrichtung. Vorzugsweise umfasst die Vielzahl von Beleuchtungsvorrichtungen insgesamt mindestens 10, insbesondere mindestens 50 Beleuchtungsvorrichtungen.

Die Vielzahl von Beleuchtungsvorrichtungen kann als Lichtbandsystem angeordnet sein.

Dies hat den Vorteil, dass die Position der Beleuchtungsvorrichtungen unveränderlich ist, und somit nur einmal eine Route entlang der Beleuchtungsvorrichtungen bestimmt werden muss.

Die Beleuchtungsvorrichtungen können im Innenraum oder in einem Außenraumen eines Gebäudes installiert werden.

Vorzugsweise sind alle Beleuchtungsvorrichtungen der Vielzahl von Beleuchtungsvorrichtungen fest installiert.

In Ausführungsformen kann vorgesehen sein, dass die Beleuchtungsvorrichtungen Sensoren aufweisen, um ihre eigene Position zu bestimmen. Zum Beispiel können dies GPS- und/oder Galileo-Sensoren sein.

Gemäß einer bevorzugten Ausführungsform ist vorgesehen, dass die erste Beleuchtungsvorrichtung weiterhin einen ersten Empfänger zum Empfangen eines Ortungssignals des Fahrzeugs und die zweite Beleuchtungsvorrichtung weiterhin einen zweiten Empfänger zum Empfangen eines Ortungssignals des Fahrzeugs aufweist.

Somit können die Beleuchtungsvorrichtungen erfassen, wo sich das autonome Fahrzeug gerade befindet. Zum Beispiel kann vorgesehen sein, dass das zweite Führsignal dann abgeschaltet wird, wenn das Fahrzeug die zweite Beleuchtungsvorrichtung erreicht hat. Dass das Fahrzeug die zweite Beleuchtungsvorrichtung erreicht hat, kann z.B. erkannt werden, wenn ein von dem zweiten Empfänger gemessenes Signal einen vorbestimmten Schwellenwert überschritten hat.

Die Beleuchtungsvorrichtungen können dazu ausgebildet sein, die Information über die gemessenen Ortungssignale über das Netzwerk zu anderen Beleuchtungsvorrichtungen weiterzuleiten.

Gemäß einer bevorzugten Ausführungsform ist vorgesehen, dass der erste Sender und ein Leuchtmittel der ersten Beleuchtungsvorrichtung so angeordnet sind, dass das vom ersten Sender gesendete Führsignal und von dem Leuchtmittel emittiertes Licht durch eine gemeinsame Optik, insbesondere einen Reflektor und/oder eine Linse, räumlich verteilt werden.

Diese Ausführungsform hat den Vorteil, dass die sowieso vorhandene Optik der Beleuchtungsvorrichtung (zum Verteilen des Lichts von einem Leuchtmittel der Beleuchtungsvorrichtung) auch zur Verteilung des Führsignals verwendet werden kann. Moderne Beleuchtungsvorrichtungen haben typischerweise eine aufwendige Optik, um das Licht gleichmäßig auf eine Zielregion verteilen zu können. Diese Optik kann gemäß der Ausführungsform dann auch zur gleichmäßigen Verteilung des Führsignals verwendet werden.

Erfindungsgemäß ist vorgesehen, dass die Steuerung dazu ausgebildet ist, die Vielzahl von Beleuchtungsvorrichtungen so anzusteuern, dass zu jedem Zeitpunkt nur ein Sender von einer Beleuchtungsvorrichtung aktiv ist. Somit ist sichergestellt, dass das autonome Fahrzeug immer nur zu der Beleuchtungsvorrichtung hingeführt wird, die als nächstes angesteuert werden soll. Vorzugsweise werden die Beleuchtungsvorrichtungen von einer zentralen Steuervorrichtung angesteuert, wobei die zentrale Steuervorrichtung eine Route gespeichert haben kann.

Gemäß einer bevorzugten Ausführungsform ist vorgesehen, dass der erste und der zweite Sender konfiguriert sind, um frequenzmoduliertes Licht auszusenden. Zumindest Beispiel können über unterschiedliche Frequenzen des Führsignals unterschiedliche Befehle an das Fahrzeug gesendet werden. Zum Beispiel kann eine bestimme Frequenz ein Stoppsignal kodieren, so dass zum Beispiel in einem Notfall eine Drohne sofort gestoppt werden kann.

Gemäß einer bevorzugten Ausführungsform ist vorgesehen, dass der erste und der zweite Sender Infrarot-Leuchtdioden umfassen. Infrarot-Leuchtdioden sind klein, kostengünstig, langlebig und von ausreichender Sendleistung, um das Fahrzeug zuverlässig anzusteuern. Vorzugsweise wird die Infrarot-Leuchtdiode neben dem Leuchtmittel der Beleuchtungsvorrichtung angeordnet. Zum Beispiel kann die Infrarot-Leuchtiode unmittelbar neben dem Leuchtmittel angeordnet sein. Ggf. müssen geeignete Maßnahmen zur Wärmeableitung getroffen werden, damit die Wärme des Leuchtmittels nicht zu einer Überhitzung der Infrarot-Leuchtdiode führt.

Gemäß einer bevorzugten Ausführungsform ist vorgesehen, dass der erste und der zweite Sender dazu ausgebildet sind, Signale mit unterschiedlicher Wellenlänge und/oder unterschiedlicher Frequenzmodulation auszusenden. Somit können unterschiedliche Fahrzeuge unterschiedlich angesteuert werden. Zum Beispiel kann ein erstes Fahrzeug angesteuert werden, um einer ersten Route zu folgen und ein zweites Fahrzeug kann angesteuert werden, um einer zweiten Route zu folgen.

Gemäß einer bevorzugten Ausführungsform ist vorgesehen, dass die Vielzahl von Beleuchtungsvorrichtungen eine Vielzahl von Empfängern umfasst, die dazu ausgebildet sind, von dem Fahrzeug ausgesendete Ortungssignale zu empfangen, sowie eine Aufzeichnungsvorrichtung, die dazu ausgebildet ist, aus den empfangenen Ortungssignalen eine Route zu bestimmen.

Somit kann zum Beispiel die Route dadurch festgelegt werden, dass ein Benutzer die Route einmal zu Fuß abläuft und dabei einen Sender für das Ortungssignal mit sich führt. Die Ortungssignale werden von den Empfängern der Beleuchtungsvorrichtungen empfangen und aufgezeichnet. Aus der Abfolge, wann welcher Empfänger das Ortungssignal empfängt, kann dann die Abfolge der auszusendenden Führsignale gemäß dieser Route bestimmt werden.

Gemäß einer bevorzugten Ausführungsform ist vorgesehen, dass das System dazu ausgebildet ist, einen Flugplan über ein Netzwerk, insbesondere ein Funk-Netzwerk, zu empfangen. Zum Beispiel können die vernetzten Beleuchtungsvorrichtungen mit einer Steuereinheit vernetzt sein, wobei die Steuereinheit eine Eingabevorrichtung zum Eingeben und Darstellen einer Route beinhaltet.

Gemäß einer bevorzugten Ausführungsform ist vorgesehen, dass der erste und der zweite Sender ausgebildet sind, ein Führsignal mit einer ersten Codierung und ein Führsignal mit einer zweiten Codierung, das von der ersten Codierung verschieden ist, zu senden. Derartige Codierungen können verwendet werden, um unterschiedliche Fahrzeuge auf unterschiedliche Routen zu steuern, oder um bestimmte Kommandos an die Fahrzeuge zu senden.

Gemäß einem weiteren Aspekt der vorliegenden Erfindung wird ein
Verfahren zum Führen eines autonomen Fahrzeugs mit einer Vielzahl von Beleuchtungsvorrichtungen bereitgestellt. Das Verfahren umfasst die Schritte:
- Senden, von einer ersten Beleuchtungsvorrichtung, eines ersten Führsignals zum Führen des Fahrzeugs zu der ersten Beleuchtungsvorrichtung, und
- Senden, von einer zweiten Beleuchtungsvorrichtung, eines zweiten Führsignals zum Führen des Fahrzeugs zu der zweiten Beleuchtungsvorrichtung.

Anweisungen, die, wenn sie von einem Prozessor ausgeführt werden, die Schritte des oben genannten Verfahrens ausführen, können auf einem Datenträger gespeichert werden.

Gemäß einer bevorzugten Ausführungsform ist vorgesehen, dass das Verfahren weiterhin umfasst, eine Route entlang der Vielzahl von Beleuchtungsvorrichtungen zu erfassen, indem, während sich das autonome Fahrzeug entlang der Route bewegt, ein von dem autonomen Fahrzeug emittiertes und von Empfängern der Vielzahl von Beleuchtungsvorrichtungen empfangenes Ortungssignal aufgezeichnet wird.

Ein weiterer Aspekt der Erfindung bezieht sich auf ein autonomes Fahrzeug, das dazu ausgebildet ist durch ein Verfahren gemäß einem der Ansprüche 13 und 14 entlang einer Route geführt zu werden. Zum Beispiel kann es sich bei dem autonomen Fahrzeug um eine Drohne, d.h. ein unbemanntes Luftfahrzeug oder um einen Putzroboter handeln. Das autonome Fahrzeug kann ein oder mehrere Sender aufweisen, die dazu ausgebildet sind, das Ortungssignal auszusenden. Weiterhin kann das autonome Fahrzeug ein oder mehrere Empfänger aufweisen, die dazu ausgebildet sind, die Führsignale zu empfangen.

Das autonome Fahrzeug kann Bestandteil eines der obengenannten Systeme sein. Es versteht sich, dass dabei der Sender des Fahrzeugs vorzugsweise so ausgebildet ist, dass sein Ortungssignal von den Empfängern der Beleuchtungsvorrichtungen empfangen werden kann.

Weitere Merkmale und Vorteile der vorliegenden Erfindung werden aus der nachfolgenden detaillierten Beschreibung einer Ausführungsform deutlich, welche in Bezug auf die beigefügte Figur gegeben wird.

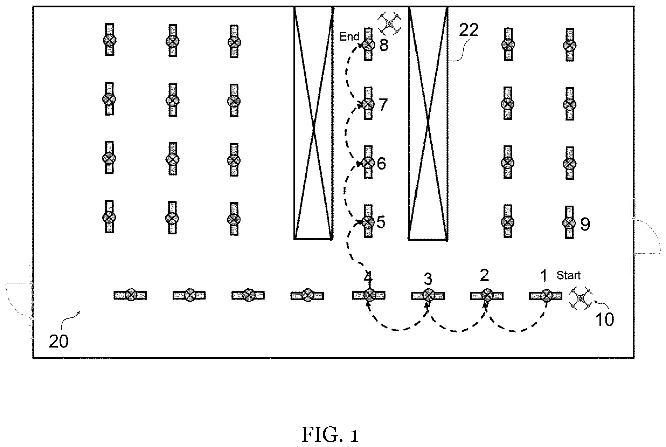

FIG. 1 zeigt eine Anordnung zum Führen einer Drohne 10 durch einen Raum in einem Raum 20 eines Gebäudes. Die Anordnung umfasst eine Vielzahl von Beleuchtungsvorrichtungen 1-8, die Sender zum Aussenden eines Führsignals aufweisen. Die Führung beginnt, indem an der Beleuchtungsvorrichtung 1 ein Führsignal, z.B. im Infrarotbereich, ausgegeben wird. Dieses Führsignal wird von der Drohne 10 empfangen. Die Drohne 10 fliegt daraufhin auf das Führsignal zu. Befindet sich die Drohne 10 bei der Beleuchtungsvorrichtung 1, wird dieses Sendesignal abgeschaltet und die Beleuchtungsvorrichtung 2 beginnt zu senden. Die Führung verläuft entsprechend bis zur Beleuchtungsvorrichtung 8, womit die Drohne den Endpunkt der Route 12 erreicht hat. In dem Raum 20 befinden sich weitere Beleuchtungsvorrichtungen 9, die bei der Führung der Drohne 10 auf dieser Route 12 nicht involviert sind. Weiterhin befinden sich in dem Raum 10 Lagerregale 22. Die Drohne kann auf der vorgegebenen Route 12 z.B. zwischen den Lagerregalen 22 geführt werden.

In anderen Ausführungsformen kann es sich statt um einen Raum in einem Gebäude auch um einen Raum im Freien handeln.

Bei der Anordnung gemäß FIG. 1 erfolgt also eine Integration der Drohnenführung innerhalb einer Leuchte. Hierbei können sich Sendestufe und Empfangsstufe innerhalb der Leuchte befinden. Die Sendestufe der Leuchte sendet ein Signal, z.B. durch IR LED Sendedioden aus. Die Empfangsstufe reagiert auf die Ortungssignale der Drohne. Die lichttechnische Abdeckung der Leuchte sorgt für eine gewünschte Aufweitung des Führsignals.

Befindet sich die Drohne im Bereich der Leuchte wird dies durch den Anstieg der Empfangsamplitude innerhalb der Leuchte detektiert. Über ein intelligentes vernetztes System wird diese Information verarbeitet, so dass diese Leuchte das Senden des Führsignals abschaltet und die nächste Leuchte das Aussenden des Führsignals aktiviert. In der Drohne befindet sich eine Sende und Empfangsstufe, welche entsprechend zu der der Leuchte ausgebildet ist. Das bedeutet, die Sendestufe der Drohne ist ausgebildet, um auf einer Frequenz zu senden, die von dem Empfänger der Leuchte empfangen wird und der Sender der Leuchte ist ausgebildet, auf einer Frequenz zu senden, die von der Empfangsstufe der Drohne empfangen wird.

Vorzugsweise kennt die Drohne eine spezifische Frequenzmodulation der Leuchten und kann dieses Signal verarbeiten. Durch dieses frequenzmodulierte eindeutige Signal in jeder Leuchte kann eine Drohne schnell und einfach durch ein Gebäude geleitet werden, indem sie den Lichtsignalen der jeweiligen Leuchte folgt. Die Leuchten geben die Bewegungsrichtung für die Drohne vor. Die Drohne folgt diesen Lichtsignalen bis zum Ziel. Über Signalvarianten der Sende-LEDs lassen sich auch mehrere Drohnen ins Ziel führen.

### BEZUGSZEICHENLISTE

- 1-9: Beleuchtungsvorrichtung
- 10: Drohne
- 12: Route
- 20: Raum
- 22: Lagerregal

## Patentansprüche

1. System zum Führen eines autonomen Fahrzeugs (10) mit einer Vielzahl von vernetzten Beleuchtungsvorrichtungen (1-9), umfassend:
eine erste Beleuchtungsvorrichtung (1-9) mit einem ersten Sender zum Senden eines ersten Führsignals zum Führen des Fahrzeugs,
eine zweite Beleuchtungsvorrichtung (1-9) mit einem zweiten Sender zum Senden eines zweiten Führsignals zum Führen des Fahrzeugs, und
eine Steuerung, die dazu ausgebildet ist, den ersten und den zweiten Sender so anzusteuern, dass das Fahrzeug von der ersten zu der zweiten Beleuchtungsvorrichtung geführt wird,
**dadurch gekennzeichnet, dass** die Beleuchtungsvorrichtungen dazu eingerichtet sind, nicht nur zur Beleuchtung verwendet zu werden, sondern darüber hinaus auch zum Aussenden von Führsignalen, und dass die Steuerung dazu ausgebildet ist, die Vielzahl von Beleuchtungsvorrichtungen (1-9) so anzusteuern, dass zu jedem Zeitpunkt nur ein Sender von einer Beleuchtungsvorrichtung aktiv ist.

2. System nach Anspruch 1, wobei das Fahrzeug (10) eine Drohne ist.

3. System nach einem der vorherigen Ansprüche, wobei die erste und die zweite Beleuchtungsvorrichtung (1-9) fest installiert sind, insbesondere Teil einer Gebäudeinstallation sind.

4. System nach einem der vorherigen Ansprüche, wobei die erste Beleuchtungsvorrichtung (1-9) weiterhin einen ersten Empfänger zum Empfangen eines Ortungssignal des Fahrzeugs und die zweite Beleuchtungsvorrichtung (1-9) weiterhin einen zweiten Empfänger zum Empfangen eines Ortungssignals des Fahrzeugs (10) aufweist.

5. System nach einem der vorherigen Ansprüche, wobei der erste Sender und ein Leuchtmittel der ersten Beleuchtungsvorrichtung (1-9) so angeordnet sind, dass das vom ersten Sender gesendete Führsignal und von dem Leuchtmittel emittiertes Licht durch eine gemeinsame Optik, insbesondere einen Reflektor oder eine Linse, räumlich verteilt werden.

6. System nach einem der vorherigen Ansprüche, wobei der erste und der zweite Sender konfiguriert sind, um frequenzmoduliertes Licht auszusenden.

7. System nach einem der vorherigen Ansprüche, wobei der erste Sender eine Infrarot-Leuchtdiode umfasst, wobei die erste Infrarot-Leuchtdiode vorzugsweise neben einem Leuchtmittel der ersten Beleuchtungsvorrichtung (1-9) angeordnet ist.

8. System nach einem der vorherigen Ansprüche, wobei der erste und der zweite Sender dazu ausgebildet sind, Signale mit unterschiedlicher Wellenlänge und/oder unterschiedlicher Frequenzmodulation auszusenden.

9. System nach einem der vorherigen Ansprüche, wobei die Vielzahl von Beleuchtungsvorrichtungen (1-9) eine Vielzahl von Empfängern umfasst, die dazu ausgebildet sind, von dem Fahrzeug (10) ausgesendete Ortungssignale zu empfangen, sowie eine Aufzeichnungsvorrichtung, die dazu ausgebildet ist, aus den empfangenen Ortungssignalen eine Route (12) zu bestimmen.

10. System nach einem der vorherigen Ansprüche, wobei das System dazu ausgebildet ist, eine Route über ein Netzwerk, insbesondere ein Funk-Netzwerk, zu empfangen.

11. System nach einem der vorherigen Ansprüche, wobei der erste und der zweite Sender ausgebildet sind, ein Führsignal mit einer ersten Codierung und ein Führsignal mit einer zweiten Codierung, das von der ersten Codierung verschieden ist, zu senden.

12. Verfahren zum Führen eines autonomen Fahrzeugs (10) mit einer Vielzahl von vernetzten Beleuchtungsvorrichtungen (1-9), umfassend:
- Senden, von einer ersten Beleuchtungsvorrichtung, eines ersten Führsignals zum Führen des Fahrzeugs (10) zu der ersten Beleuchtungsvorrichtung,
- Senden, von einer zweiten Beleuchtungsvorrichtung, eines zweiten Führsignals zum Führen des Fahrzeugs zu der zweiten Beleuchtungsvorrichtung,
**dadurch gekennzeichnet, dass** die Beleuchtungsvorrichtungen dazu eingerichtet sind, nicht nur zur Beleuchtung verwendet zu werden, sondern darüber hinaus auch zum Aussenden von Führsignalen, und dass
die Steuerung eine Vielzahl von Beleuchtungsvorrichtungen so ansteuert, dass zu jedem Zeitpunkt nur ein Sender von einer Beleuchtungsvorrichtung aktiv ist.

13. Verfahren nach Anspruch 12, wobei das Verfahren weiterhin umfasst, eine Route (12) entlang der Vielzahl von Beleuchtungsvorrichtungen (1-9) zu erfassen, indem, während sich das autonome Fahrzeug entlang der Route bewegt, ein von dem autonomen Fahrzeug emittiertes und von Empfängern der Vielzahl von Beleuchtungsvorrichtungen empfangenes Ortungssignal aufgezeichnet wird.

14. Autonomes Fahrzeug (10), dazu ausgebildet durch ein Verfahren gemäß einem der Ansprüche 12 und 13 entlang einer Route (12) geführt zu werden.

## Claims

1. A system for guiding an autonomous vehicle (10) having a plurality of networked lighting devices (1-9), comprising:
a first lighting device (1-9) having a first transmitter for transmitting a first guiding signal for guiding the vehicle,
a second lighting device (1-9) having a second transmitter for transmitting a second guiding signal for guiding the vehicle, and
a controller configured to control the first and second transmitters such that the vehicle is guided from the first to the second lighting device,
**characterised in that** the lighting devices are arranged to be used not only for lighting, but also for transmitting guiding signals, and **in that** the controller is configured to control the plurality of lighting devices (1-9) such that only one transmitter from one lighting device is active at any time.

2. The system according to claim 1, wherein the vehicle (10) is a drone.

3. The system according to any one of the preceding claims, wherein the first and second lighting devices (1-9) are fixedly installed, in particular are part of a building installation.

4. The system according to any one of the preceding claims, wherein the first lighting device (1-9) further comprises a first receiver for receiving a locating signal of the vehicle and the second lighting device (1-9) further comprises a second receiver for receiving a locating signal of the vehicle (10).

5. The system according to any one of the preceding claims, wherein the first transmitter and a lighting means of the first lighting device (1-9) are arranged such that the guiding signal transmitted by the first transmitter and light emitted by the lighting means are spatially distributed by a common optics, in particular a reflector or a lens.

6. The system according to any one of the preceding claims, wherein the first and second transmitters are configured to emit frequency modulated light.

7. The system according to any one of the preceding claims, wherein the first transmitter comprises an infrared light emitting diode, wherein the first infrared light emitting diode is preferably arranged next to a lighting means of the first lighting device (1-9).

8. The system according to any one of the preceding claims, wherein the first and second transmitters are configured to emit signals with different wavelength and/or different frequency modulation.

9. The system according to any one of the preceding claims, wherein the plurality of lighting devices (1-9) comprises a plurality of receivers configured to receive locating signals emitted by the vehicle (10) and a recording device configured to determine a route (12) from the received locating signals.

10. The system according to any one of the preceding claims, wherein the system is configured to receive a route via a network, in particular a radio network.

11. The system according to any one of the preceding claims, wherein the first and second transmitters are configured to transmit a guiding signal with a first coding and a guiding signal with a second coding, which is different from the first coding.

12. A method for guiding an autonomous vehicle (10) having a plurality of networked lighting devices (1-9), comprising:
- transmitting, from a first lighting device, a first guiding signal for guiding the vehicle (10) to the first lighting device,
- transmitting, from a second lighting device, a second guiding signal for guiding the vehicle to the second lighting device,
**characterised in that** the lighting devices are arranged to be used not only for lighting, but also for transmitting guiding signals, and **in that** the controller controls a plurality of lighting devices such that only one transmitter from one lighting device is active at any time.

13. The method according to claim 12, wherein the method further comprises detecting a route (12) along the plurality of lighting devices (1-9) by recording, while the autonomous vehicle is moving along the route, a locating signal emitted by the autonomous vehicle and received by receivers of the plurality of lighting devices.

14. An autonomous vehicle (10) configured to be guided along a route (12) by a method according to any one of claims 12 and 13.

## Revendications

1. Système pour le guidage d'un véhicule autonome (10) avec une pluralité de dispositifs d'éclairage en réseau (1 - 9), comprenant :
un premier dispositif d'éclairage (1 - 9) avec un premier émetteur pour l'émission d'un premier signal de guidage pour le guidage du véhicule,
un deuxième dispositif d'éclairage (1 - 9) avec un deuxième émetteur pour l'émission d'un deuxième signal de guidage pour le guidage du véhicule et
une commande, qui est conçue pour contrôler le premier et le deuxième émetteur, de sorte que le véhicule soit guidé du premier vers le deuxième dispositif d'éclairage,
**caractérisé en ce que** les dispositifs d'éclairage sont conçus de façon à ne pas être utilisés uniquement pour l'éclairage, mais en outre pour l'émission de signaux de guidage et **en ce que** la commande est conçue pour contrôler la pluralité de dispositifs d'éclairage (1 - 9) de sorte que, à chaque instant, un seul émetteur d'un dispositif d'éclairage soit actif.

2. Système selon la revendication 1, dans lequel le véhicule (10) est un drone.

3. Système selon l'une des revendications précédentes, dans lequel les premier et deuxième dispositifs d'éclairage (1 - 9) sont installés de manière fixe, plus particulièrement ils font partie d'une installation d'immeuble

4. Système selon l'une des revendications précédentes, dans lequel le premier dispositif d'éclairage (1 - 9) comprend en outre un premier récepteur pour la réception d'un signal de localisation du véhicule et le deuxième dispositif d'éclairage (1 - 9) comprend en outre un deuxième récepteur pour la réception d'un signal de localisation du véhicule (10).

5. Système selon l'une des revendications précédentes, dans lequel le premier émetteur et un moyen d'éclairage du premier dispositif d'éclairage (1 - 9) sont disposés de façon à ce que le signal de guidage émis par le premier émetteur et la lumière émise par le moyen d'éclairage soient réparties dans l'espace à l'aide d'une optique commune, plus particulièrement un réflecteur ou une lentille.

6. Système selon l'une des revendications précédentes, dans lequel les premier et deuxième émetteurs sont conçus pour émettre une lumière modulée en fréquence.

7. Système selon l'une des revendications précédentes, dans lequel le premier émetteur comprend une diode électroluminescente infrarouge, dans lequel la première diode électroluminescente infrarouge est disposée de préférence près d'un moyen d'éclairage du premier dispositif d'éclairage (1 - 9).

8. Système selon l'une des revendications précédentes, dans lequel le premier émetteur et le deuxième émetteur sont conçus pour émettre des signaux avec des longueurs d'onde différentes et/ou des modulations en fréquence différentes.

9. Système selon l'une des revendications précédentes, dans lequel la pluralité de dispositifs d'éclairage (1 - 9) comprend une pluralité de récepteurs qui sont conçus pour recevoir les signaux de localisation émis par le véhicule (10) ainsi qu'un dispositif d'enregistrement qui est conçu pour déterminer un itinéraire (12) à partir des signaux de localisation reçus.

10. Système selon l'une des revendications précédentes, dans lequel le système est conçu pour recevoir un itinéraire par l'intermédiaire d'un réseau, plus particulièrement par l'intermédiaire d'un réseau radio.

11. Système selon l'une des revendications précédentes, dans lequel les premier et deuxième émetteurs sont conçus pour émettre un signal de guidage avec un premier codage et un signal de guidage avec un deuxième codage, qui est différent du premier codage.

12. Procédé de guidage d'un véhicule autonome (10) avec une pluralité de dispositifs d'éclairage (1 - 9) en réseau, comprenant :
- l'émission, par un premier dispositif d'éclairage, d'un premier signal de guidage pour le guidage du véhicule (10) vers le premier dispositif d'éclairage,
- l'émission, par un deuxième dispositif d'éclairage, d'un deuxième signal de guidage pour le guidage du véhicule vers le deuxième dispositif d'éclairage,
**caractérisé en ce que** les dispositifs d'éclairage sont conçus de façon à ne pas être utilisés uniquement pour l'éclairage, mais en outre pour l'émission de signaux de guidage et **en ce que** la commande est conçue pour contrôler la pluralité de dispositifs d'éclairage (1 - 9) de sorte que, à chaque instant, un seul émetteur d'un dispositif d'éclairage soit actif.

13. Procédé selon la revendication 12, dans lequel le procédé comprend en outre la détermination d'un itinéraire (12) le long de la pluralité de dispositifs d'éclairage (1 - 9) en enregistrant, tandis que le véhicule autonome se déplace le long de l'itinéraire, un signal de localisation émis par le véhicule autonome et reçu par les récepteurs de la pluralité de dispositifs d'éclairage.

14. Véhicule autonome (10), conçu pour être guidé à l'aide d'un procédé selon l'une des revendications 12 et 13 le long d'un itinéraire (12).
